# EUROPÄISCHE PATENTSCHRIFT

(11) **EP 3 626 391 B1**
(45) Veröffentlichungstag und Bekanntmachung des Hinweises auf die Patenterteilung: **19.01.2022**
(21) Anmeldenummer: 19193239.1
(22) Anmeldetag: 23.08.2019
(51) Int. Cl.: B23Q 11/00, B25F 5/02

(54) **STAUBSAUGVORRICHTUNG FÜR EINE HANDWERKZEUGMASCHINE**
VACUUM CLEANER FOR A POWER TOOL
DISPOSITIF ASPIRATEUR POUR UNE MACHINE OUTIL

(30) Priorität: 10.09.2018 DE 102018215308
(43) Veröffentlichungstag der Anmeldung: 25.03.2020
(73) Patentinhaber: Robert Bosch GmbH, 70442 Stuttgart (DE)
(72) Erfinder: Wall, Michael, 70178 Stuttgart (DE); Habermann, Rudi, 70372 Stuttgart (DE); Meiser, Charlotte, 71394 Kernen Im Remstal (DE); Kaiser, Joerg, 71706 Markgroeningen (DE); Bayha, Tobias, 72141 Walddorfhaeslach (DE); Schmid, Hardy, 70565 Stuttgart (DE); Blind, Jan-Simon, 71144 Steinenbronn (DE); Maier, Ralf, 73254 Koengen (DE); Schart, Simon, 73101 Aichelberg (DE)

(56) Entgegenhaltungen:
- DE-A1-102015 217 825
- US-A1- 2006 107 633
- US-A1- 2010 116 261
- US-A1- 2016 016 270

## Beschreibung

### Stand der Technik

In der US 7,644,469 B2 ist ein Staubsauger mit einer Reinigungseinrichtung zur Reinigung eines Filters beschrieben, wobei die Reinigungseinrichtung von einem elektrischen Motor angetrieben wird. Eine Staubsaugvorrichtung gemäß den Merkmalen des Oberbegriffs des Anspruchs 1 ist aus US2006107633 bekannt.

### Offenbarung der Erfindung

Die Erfindung betrifft eine Staubabsaugvorrichtung für eine Handwerkzeugmaschine, mit einem Gehäuse, mit einer mechanischen Schnittstelle zur lösbaren Verbindung der Staubabsaugvorrichtung mit der Handwerkzeugmaschine, mit einer Staubsammelkammer, die mit einer Filtereinheit verbunden ist, und mit einer Filterreinigungseinheit, wobei die Filterreinigungseinheit ein Stoßelement aufweist, das beweglich im und/oder am Gehäuse der Staubabsaugvorrichtung gelagert ist. Es wird vorgeschlagen, dass das Stoßelement dazu ausgebildet ist, die Filtereinheit direkt mit einer stoßartigen Kraft zu beaufschlagen. Vorteilhaft kann dadurch eine hohe Absaugleistung über einen längeren Zeitraum realisiert werden.

Die Staubabsaugvorrichtung ist vorzugsweise als ein Zubehör für die Handwerkzeugmaschine ausgebildet, wobei die Handwerkzeugmaschine auch ohne das Zubehör einsatzfähig ist. Die Staubabsaugvorrichtung ist insbesondere zur Absaugung von Staubgut, beispielsweise Bohrstaub/Schleifstaub/Sägestaub während der Bearbeitung eines Werkstücks durch eine Handwerkzeugmaschine ausgebildet. Insbesondere weist die Staubabsaugvorrichtung einen Luftkanal auf, durch welchen im Betrieb ein Luftstrom geleitet wird. Der Luftstrom ist insbesondere mittels einer Gebläseeinheit erzeugbar. Die Gebläseeinheit kann in der Staubabsaugvorrichtung, in der Handwerkzeugmaschine oder in einem externen Staubsauger angeordnet sein. Die Gebläseeinheit umfasst zumindest ein Lüfterelement, welches beispielhaft als ein Radialventilator oder als ein Axialventilator ausgebildet sein kann.

Die Handwerkzeugmaschine kann beispielhaft als ein Bohrhammer, als eine Bohrmaschine, als ein Schlaghammer, als eine Schlagbohrmaschine, als ein Winkelschleifer, als eine Schleifmaschine, als eine Säbelsäge, etc. ausgebildet sein, wobei diese Werkzeugmaschinen gemein haben, dass während des Betriebs Bohrstaub/Schleifstaub/Sägestaub entsteht. Die Handwerkzeugmaschine kann als ein Netzgerät oder als ein Akkugerät ausgebildet sein.

Die mechanische Schnittstelle der Staubabsaugvorrichtung ist insbesondere zur kraft- und/oder formschlüssigen Verbindung der Staubabsaugvorrichtung mit der Handwerkzeugmaschine, insbesondere dem Gehäuse der Staubabsaugvorrichtung mit einem Gehäuse der Handwerkzeugmaschine, ausgebildet. Unter einer "lösbaren Verbindung" soll im Zusammenhang diese Anmeldung insbesondere eine werkzeuglos lösbare Verbindung verstanden werden. Die mechanische Schnittstelle weist insbesondere zumindest ein Führungselement zur Führung der Staubabsaugvorrichtung beim Verbinden mit der Handwerkzeugmaschine bzw. beim Lösen von der Handwerkzeugmaschine auf. Das Führungselement ist vorzugsweise als eine Führungsschiene ausgebildet. Zudem ist denkbar, dass die mechanische Schnittstelle eine Verriegelungseinheit zur Verriegelung der Staubabsaugvorrichtung und der Handwerkzeugmaschine aufweist. Die Verriegelungseinheit weist vorzugsweise zumindest ein Verriegelungselement und zumindest ein Betätigungselement zur Betätigung der Verriegelungseinheit auf. Ergänzend ist ebenfalls denkbar, dass die Staubabsaugvorrichtung eine elektrische Schnittstelle aufweist, über die die Staubabsaugvorrichtung beispielsweise mit Energie versorgbar ist, Informationen austauschen kann oder steuerbar ist.

Alternativ ist allerdings ebenfalls denkbar, dass die Staubabsaugvorrichtung als ein Teil der Handwerkzeugmaschine ausgebildet bzw. in der Handwerkzeugmaschine integriert ist und somit unlösbar mit dieser verbunden ist.

Die Staubsammelkammer ist insbesondere zur Aufnahme des beim Betrieb der Handwerkzeugmaschine erzeugtem Staubgut ausgebildet. Die Staubsammelkammer ist insbesondere derart angeordnet, dass der Luftstrom zumindest teilweise durch die Staubsammelkammer geleitet wird. Insbesondere weist die Staubsammelkammer ein Staubsammelkammergehäuse auf. Das Staubsammelkammergehäuse kann in das Gehäuse der Staubabsaugvorrichtung integriert sein oder alternativ lösbar mit diesem verbindbar ausgebildet sein. Die Staubsammelkammer weist einen Eingang, über den der Luftstrom in die Staubsammelkammer eintritt, und einen Ausgang, über den der Luftstrom die Staubsammelkammer verlässt, auf. Der Eingang und der Ausgang der Staubsammelkammer sind vorzugsweise getrennt voneinander ausgebildet. Des Weiteren ist denkbar, dass die Staubsammelkammer eine Entleerungsöffnung aufweist, die zum Entleeren der Staubsammelkammer vorgesehen ist. Vorzugsweise ist die Entleerungsöffnung verschließbar, beispielsweise mittels einer Entleerungsklappe verschließbar, ausgebildet.

Die Filtereinheit ist zur Filterung des Staubguts aus dem Luftstrom vorgesehen. Die Filtereinheit ist insbesondere im Bereich des Ausgangs der Staubsammelkammer angeordnet. Die Filtereinheit ist insbesondere lösbar mit der Staubabsaugvorrichtung, vorzugsweise lösbar mit der Staubsammelkammer der Staubabsaugvorrichtung, verbindbar. Die Filtereinheit weist zumindest ein Filterelement auf. Das Filterelement kann beispielsweise aus einem Filz, einem Vlies, einem Gewebe, einem Papier oder dergleichen bestehen. Das Filterelement ist insbesondere als ein Mikrofilter oder ein Feinstaubfilter ausgebildet, vorzugsweise als ein HEPA-Filter.

Unter einem Stoßelement, das die Filtereinheit "direkt" beaufschlagt soll insbesondere ein Stoßelement verstanden werden, das während der Beaufschlagung die Filtereinheit, vorzugsweise das Filterelement, berührt. Alternativ wäre auch denkbar, dass das Stoßelement die Filtereinheit indirekt mittels einer stoßartigen Kraft beaufschlagt, wobei bei der indirekten Beaufschlagung das Stoßelement auf ein mit der Filtereinheit verbundenes Gehäuseteil, wie beispielsweise das Gehäuse der Staubabsaugvorrichtung oder das Staubsammelkammergehäuse wirkt.

Des Weiteren wird vorgeschlagen, dass die Filterreinigungseinheit, insbesondere das Stoßelement der Filterreinigungseinheit, an der Filtereinheit, vorzugsweise an einem Filterelement der Filtereinheit, anliegt. Insbesondere liegt das Stoßelement in einer Ruheposition an der Filterreinigungseinheit, vorzugsweise am Filterelement, an. Alternativ ist ebenso denkbar, dass das Stoßelement in der Ruheposition frei über der Filtereinheit, insbesondere über dem Filterelement, hängt.

Weiterhin wird vorgeschlagen, dass die Filterreinigungseinheit ein Rückstellelement aufweist, welches das Stoßelement mit einer Kraft in Richtung der Filtereinheit beaufschlagt. Das Rückstellelement ist insbesondere als ein Federelement ausgebildet. Das Federelement kann beispielsweise als eine Ringfeder, als eine Schraubenfeder, als eine Spiralfeder, als eine Schlingfeder, etc. ausgebildet sein. Insbesondere ist das Stoßelement zwischen der Filtereinheit und dem Rückstellelement angeordnet.

Zudem wird vorgeschlagen, dass die Filterreinigungseinheit ein Betätigungselement aufweist, das mechanisch mit dem Stoßelement gekoppelt ist. Unter zwei Bauteilen bzw. Baugruppen, die miteinander mechanisch gekoppelt sind, soll im Zusammenhang dieser Anmeldung insbesondere verstanden werden, dass die Bauteile bzw. die Baugruppen derart miteinander verbunden sind, dass eine Bewegung des einen Bauteils eine Bewegung des anderen Bauteils bewirkt oder bedingt. Insbesondere ist das Betätigungselement derart mit dem Stoßelement mechanisch gekoppelt, dass sich das Stoßelement zumindest teilweise bei einer Betätigung des Betätigungselements von der Filtereinheit wegbewegt. Vorzugsweise erfolgt die Betätigung des Betätigungselements entgegen einer Kraftwirkung des Federelements. insbesondere sind das Stoßelement und das Betätigungselement relativ zueinander beweglich ausgebildet, wobei eine Betätigungsachse des Betätigungselements und eine Bewegungsachse des Stoßelements parallel sind. Die Betätigungsachse bzw. die Bewegungsachse können als eine Drehachse oder als eine Längsachse, entlang der sich ein Bauteil bewegt, ausgebildet sein. Es ist ebenfalls denkbar, dass die Betätigungsachse und die Bewegungsachse sich kreuzen, vorzugsweise im Wesentlichen senkrecht zueinander angeordnet sind.

Des Weiteren wird vorgeschlagen, dass das Betätigungselement zur manuellen Betätigung ausgebildet ist und eine Bedienfläche aufweist. Die Bedienfläche ist vorzugsweise auf einer Außenfläche des Gehäuses der Staubabsaugvorrichtung angeordnet. Insbesondere ist die Bedienfläche seitlich angeordnet. Vorteilhaft kann dadurch eine besonders komfortable Bedienung der Filterreinigungseinheit realisiert werden.

Weiterhin wird vorgeschlagen, dass das Stoßelement zumindest einen Lufttransportkanal aufweist. Vorteilhaft kann dadurch eine Anordnung des Stoßelements im Luftkanal der Staubabsaugvorrichtung realisiert werden, ohne dass der Luftstrom zu stark beeinflusst wird. Der Lufttransportkanal ist insbesondere als eine Ausnehmung im Stoßelement ausgebildet.

Zudem wird vorgeschlagen, dass das Betätigungselement zur automatischen Betätigung ausgebildet ist. Vorteilhaft kann dadurch die Bedienung der Filterreinigungseinheit zumindest teilweise, insbesondere vollständig, automatisiert werden. Insbesondere ist das Betätigungselement derart ausgebildet ist, dass die automatische Betätigung während einer Verbindung der Staubabsaugvorrichtung mit der Handwerkzeugmaschine oder während des Bohrvorgangs erfolgt. Beispielsweise ist denkbar, dass das Betätigungselement der Staubabsaugvorrichtung zugeordnet ist und einen Betätigungsbereich aufweist, der derart angeordnet ist, dass er beim Verbinden mit der Handwerkzeugmaschine mit dem Gehäuse der Handwerkzeugmaschine oder einem korrespondierenden Betätigungsbereich in Eingriff kommt und dadurch betätigt wird. Es ist ebenfalls denkbar, dass ein Betätigungsbereich des Betätigungselements mit einem elektrisch ansteuerbaren Aktor gekoppelt ist. Der Aktor kann beispielsweise über ein Bedienelement an der Staubabsaugvorrichtung oder an der Handwerkzeugmaschine angesteuert werden. Alternativ wäre auch denkbar, dass der Aktor in vorprogrammierten Intervallen oder in Abhängigkeit einer Saugleistung der Staubabsaugvorrichtung angesteuert wird.

Des Weiteren wird vorgeschlagen, dass die Filtereinheit einen Filterrahmen aufweist, wobei der Filterrahmen mit der Staubsammelkammer verbindbar ist. Die Verbindung zwischen dem Filterrahmen und der Staubsammelkammer ist vorzugsweise lösbar ausgebildet, insbesondere über eine kraft- und/oder formschlüssige Verbindung. Der Filterrahmen kann aus einem Kunststoff ausgebildet sein. Insbesondere ist der Filterrahmen aus einem Hartplastik ausgebildet. Vorzugsweise ist der Filterrahmen aus einem Weichplastik ausgebildet, bevorzugt aus TPE. Unter einem Weichplastik Material soll in diesem Zusammenhang insbesondere ein biegsamer Kunststoff, beispielsweise Weich-PVC, Polyolefine oder Polyethylen verstanden werden.

Weiterhin wird vorgeschlagen, dass das Filterelement Filtertaschen aufweist, die konisch ausgebildet sind. Vorteilhaft kann dadurch eine höhere Effektivität der Filterreinigung realisiert werden. Das Filterelement umfasst zumindest zwei Filtertaschen die sich im Wesentlichen in gleicher Richtung erstrecken. Herstellungsbedingt können die Filtertaschen des Filterelements seitlich offen ausgebildet sein. Vorzugsweise weist die Filtereinheit in diesem Fall je offener Seite zumindest ein Verschlusselement auf, um diese Seiten abzudichten. Das Verschlusselement kann aus einem Kunststoff bestehen und ist vorzugsweise einstückig mit dem Filterrahmen ausgebildet.

Zudem wird vorgeschlagen, dass die Filtereinheit ein elastisches Dichtelement aufweist, das zwischen der Staubsammelkammer und/oder dem Gehäuse der Staubabsaugvorrichtung angeordnet ist, wobei das Dichtelement im montierten Zustand gestaucht ausgebildet ist. Vorteilhaft kann dadurch eine besonders effektive Abdichtung realisiert werden. Insbesondere ist das Dichtelement im montierten Zustand und in der Ruheposition des Stoßelements teilweise gestaucht ausgebildet. Insbesondere ist das Dichtelement derart angeordnet, dass sich die Stauchung des Dichtelements bei der Beaufschlagung der Filtereinheit mit einer stoßartigen Kraft durch das Stoßelement verstärkt oder verringert. Vorteilhaft kann dadurch auch während der Filterreinigung eine Abdichtung realisiert werden. Das Dichtelement ist vorzugsweise aus einem Kunststoff, bevorzugt aus Weichplastik, ausgebildet. Insbesondere sind das Dichtelement und der Filterrahmen einstückig ausgebildet.

### Zeichnungen

Weitere Vorteile ergeben sich aus der folgenden Zeichnungsbeschreibung. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen. Bezugszeichen von Merkmalen unterschiedlicher Ausführungsformen der Erfindung, die sich im Wesentlichen entsprechen, werden mit derselben Zahl und mit einem die Ausführungsform kennzeichnenden Buchstaben versehen.

Es zeigen:
- Fig. 1: eine Seitenansicht eines Systems bestehend aus einer Handwerkzeugmaschine und einer Staubabsaugvorrichtung;
- Fig. 2a: einen Teillängsschnitt der Staubabsaugvorrichtung, wobei eine Filterreinigungseinheit in einer Ruheposition ist;
- Fig. 2b: einen Teillängsschnitt der Staubabsaugvorrichtung, wobei eine Filterreinigungseinheit in einer gespannten Position ist;
- Fig. 2c: eine perspektivische Teilansicht der Staubabsaugvorrichtung;
- Fig. 3: einen Querschnitt durch das System gemäß Fig. 1;
- Fig. 4: eine perspektivische Ansicht einer Filtereinheit der Staubabsaugvorrichtung;
- Fig. 5: eine perspektivische Ansicht einer Staubsammelkammer der Staubabsaugvorrichtung;
- Fig. 6: eine alternative Ausführungsform der Staubabsaugvorrichtung;
- Fig. 7: eine weitere alternative Ausführungsform der Staubabsaugvorrichtung.

### Beschreibung der Ausführungsbeispiele

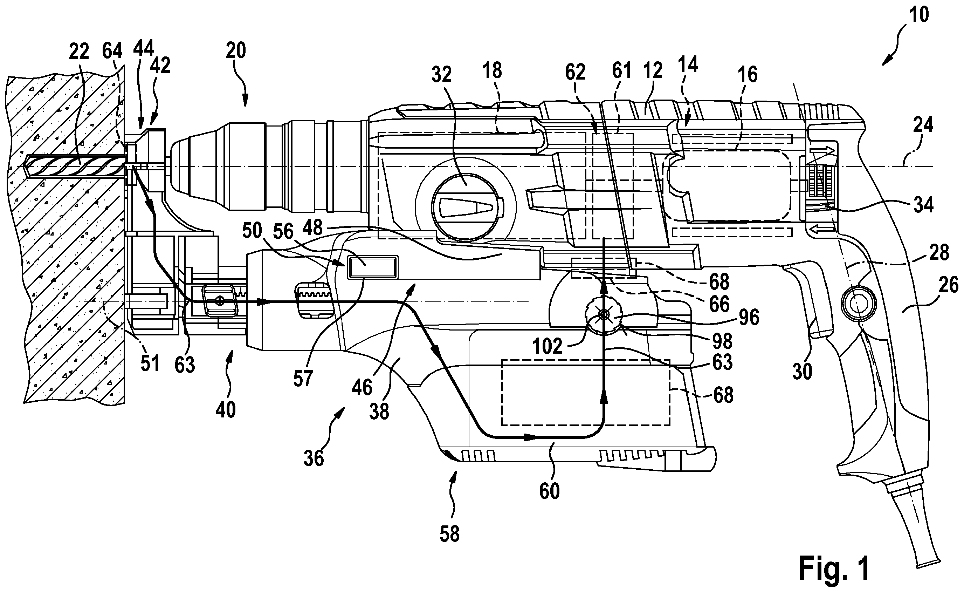

In Fig. 1 ist eine Handwerkzeugmaschine 10 in einer Seitenansicht gezeigt. Die Handwerkzeugmaschine 10 ist beispielhaft als ein Bohrhammer ausgebildet. Die Handwerkzeugmaschine 10 weist ein Gehäuse 12 auf, das als ein Außengehäuse ausgebildet ist. Das Gehäuse 12 der Handwerkzeugmaschine 10 weist eine pistolenförmige Gestalt auf. Im Gehäuse 12 der Handwerkzeugmaschine 10 ist eine Antriebseinheit 14, die einen Elektromotor 16 umfasst, und eine Getriebeeinheit 18, die ein Schlagwerk, das beispielhaft als ein pneumatisches Schlagwerk ausgebildet ist, angeordnet. An einem vorderen Ende der Handwerkzeugmaschine 10 ist eine Werkzeugaufnahme 20 angeordnet, in welcher ein Einsatzwerkzeug 22 lösbar befestigbar ist. Das Einsatzwerkzeug 22 ist beispielhaft als ein Gesteinsbohrer ausgebildet. Das Einsatzwerkzeug 22 ist rotierend um und/oder linear oszillierend entlang einer Arbeitsachse 24 antreibbar ausgebildet. Am hinteren Ende der Handwerkzeugmaschine 10 ist ein Handgriff 26 angeordnet, der sich entlang einer Griffachse 28 erstreckt. Die Griffachse 28 ist im Wesentlichen senkrecht zu der Arbeitsachse 24 angeordnet. Am Handgriff 26 ist ein Betriebsschalter 30 angeordnet, der manuell betätigbar ist und über den die Handwerkzeugmaschine 10 ein- und ausschaltbar ist. Seitlich am Gehäuse 12 der Handwerkzeugmaschine 10 ist zudem ein Betriebsartenschalter 32 und ein Drehrichtungsschalter 34 angeordnet. Der Betriebsartenschalter 32 ist zum Schalten der Betriebsart, im vorliegenden Fall zwischen einem Bohrmodus, einem Bohrhammermodus und einem Meißelmodus, ausgebildet. Der Drehrichtungsschalter 34 ist zum Schalten einer Drehrichtung des Einsatzwerkzeugs 22 ausgebildet. Der Betriebsartenschalter 32 und der Drehrichtungsschalter 34 sind auf derselben Seite des Gehäuses 12 der Handwerkzeugmaschine 10 angeordnet.

Des Weiteren ist in Fig. 1 eine Staubabsaugvorrichtung 36 in einer Seitenansicht gezeigt. Die Staubabsaugvorrichtung 36 weist ein Gehäuse 38 auf, das als ein Außengehäuse ausgebildet ist. Die Staubabsaugvorrichtung 36 weist eine ein Teleskoprohr 39 aufweisende Teleskopeinheit 40 auf, die linear beweglich im Gehäuse 38 der Staubabsaugvorrichtung 36 gelagert ist. Die Bewegung der Teleskopeinheit 40 erfolgt entlang einer Teleskopachse 41, die beispielhaft im Wesentlichen parallel zu der Arbeitsachse 24 der Handwerkzeugmaschine 10 ausgebildet ist.

Am vorderen, dem Gehäuse 38 der Staubabsaugvorrichtung 36 abgewandten, Ende der Teleskopeinheit 40 ist ein Saugkopf 42 angeordnet. Der Saugkopf 42 ist über die Teleskopeinheit 40 relativ beweglich zu dem Gehäuse 38 der Staubabsaugvorrichtung 36 ausgebildet. Der Saugkopf 42 weist eine Einsatzwerkzeugdurchführung 44 auf. Die Einsatzwerkzeugdurchführung 44 ist beispielhaft hohlzylindrisch ausgebildet und erstreckt sich im Wesentlichen koaxial zu der Arbeitsachse 24 der Handwerkzeugmaschine 10. Im Betrieb des Systems aus Handwerkzeugmaschine 10 und Staubabsaugvorrichtung 36 wird das Einsatzwerkzeug 22 durch die Einsatzwerkzeugdurchführung 44 hindurchgeführt. Die Teleskopeinheit 40 ist in Fig. 1 in einem eingefahrenen Zustand gezeigt, in welchem die Teleskopeinheit 40 über ein Anliegen des Saugkopfes 42 an einem Werkstück mit einer Kraft beaufschlagt wird.

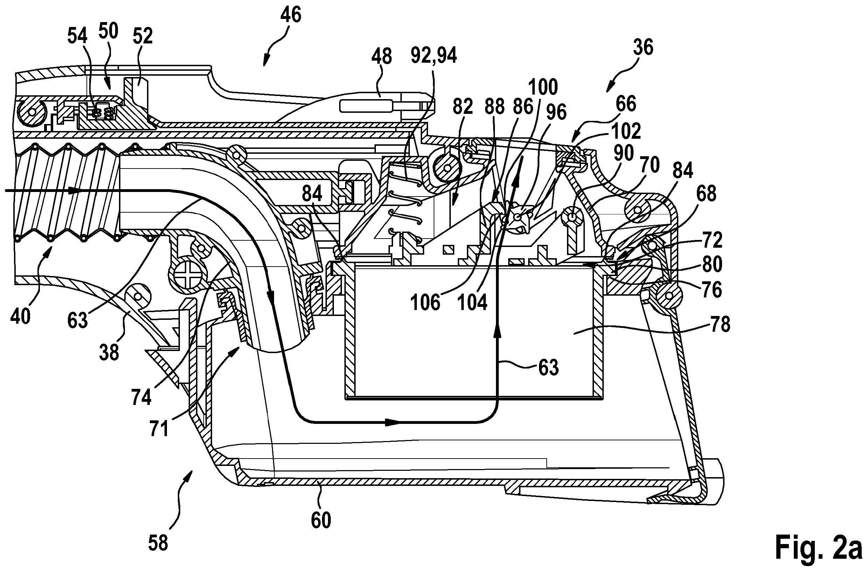

Das Gehäuse 38 der Staubabsaugvorrichtung 36 ist über eine mechanische Schnittstelle 46 mit der Handwerkzeugmaschine 10, insbesondere mit dem Gehäuse 12 der Handwerkzeugmaschine 10, verbunden. Die mechanische Schnittstelle 46 weist zwei Führungsschienen 48 auf, die sich beispielhaft im Wesentlichen parallel zu der Teleskopachse 41 bzw. der Arbeitsachse 24 der Handwerkzeugmaschine 10 erstrecken. Die Staubabsaugvorrichtung 36 ist somit von vorne auf die Handwerkzeugmaschine 10 aufschiebbar ausgebildet. Die mechanische Schnittstelle 46 weist zudem eine Verriegelungseinheit 50 zur Verriegelung der Staubabsaugvorrichtung 36 mit der Handwerkzeugmaschine 10 auf. Die Verriegelungseinheit 50 umfasst ein Verriegelungselement 52 (siehe Fig. 2a), das in Richtung der Handwerkzeugmaschine 10 aus dem Gehäuse 38 der Staubabsaugvorrichtung 36 herausragt. Das Verriegelungselement 52 ist mit Hilfe eines als Schenkelfeder ausgebildeten Federelements 54 (siehe Fig. 2a) in Richtung einer Verriegelungsposition vorgespannt. Die Verriegelungseinheit 50 weist ein manuell betätigbares Entriegelungselement 56 auf. Das Entriegelungselement 56 ist in einer seitlichen Gehäuseöffnung 57 des Gehäuses 38 der Staubabsaugvorrichtung 36 angeordnet. Vorzugsweise weist das Gehäuse 38 der Staubabsaugvorrichtung 36 zwei gegenüberliegende seitliche Gehäuseöffnungen 57 auf, damit das Entriegelungselement 56 von beiden Seiten betätigbar ist. Das Entriegelungselement 56 ist derart mechanisch mit dem Verriegelungselement 52 gekoppelt, dass bei einer manuellen Betätigung des Entriegelungselements 56 das Verriegelungselement 52 aus der Verriegelungsposition in eine Entriegelungsposition bewegt wird, wobei in der Entriegelungsposition die Staubabsaugvorrichtung 36 von der Handwerkzeugmaschine 10 gelöst werden kann.

Die Staubabsaugvorrichtung 36 weist eine Staubsammelkammer 58 auf, die lösbar mit dem Gehäuse 38 der Staubabsaugvorrichtung 36 verbunden ist. Die Staubsammelkammer 58 weist ein Staubsammelkammergehäuse 60 auf. Die Staubsammelkammer 58 ist auf einer der mechanischen Schnittstelle 46 abgewandten Seite der Staubabsaugvorrichtung 36 angeordnet.

Im Betrieb wird mittels einer Gebläseeinheit 62 ein Luftstrom erzeugt, der zur Absaugung von Staubgut an einer Arbeitsstelle des Einsatzwerkzeugs 22 vorgesehen ist. Die Gebläseeinheit 62 ist beispielhaft im Gehäuse 12 der Handwerkzeugmaschine 10 angeordnet. Alternativ wäre ebenso denkbar, dass die Gebläseeinheit 62 im Gehäuse 38 der Staubabsaugvorrichtung 36 angeordnet ist. Die Gebläseeinheit 62 weist einen Lüfter 61 auf, der beispielhaft als ein Doppellüfter ausgebildet ist und sowohl zur Erzeugung des Luftstroms in der Staubabsaugvorrichtung 36 als auch zur Kühlung des Elektromotors 16 vorgesehen ist. Der Lüfter 61 ist drehfest mit einer Motorwelle des Elektromotors 16 verbunden und wird durch diese angetrieben. Alternativ wäre ebenso denkbar, dass die Gebläseeinheit 62 durch eine eigene Antriebseinheit, wie beispielsweise einem Elektromotor, angetrieben wird.

Der Luftstrom wird in der Staubabsaugvorrichtung 36 durch einen Luftkanal 63 geleitet, der eine Absaugöffnung 64, über die der Luftstrom in den Luftkanal 63 eintritt und eine Ausgangsöffnung 66, über die der Luftstrom die Staubabsaugvorrichtung 36 verlässt, aufweist. Die Absaugöffnung 64 ist im Bereich des Saugkopfes 42, insbesondere im Bereich der Einsatzwerkzeugdurchführung 44, angeordnet. Der Luftstrom wird somit über die Absaugöffnung 64 im Bereich des Saugkopfes 42 angesaugt und wird über den Luftkanal 63 durch das Teleskoprohr 39 der Teleskopeinheit 40 in die Staubsammelkammer 58 hineingeleitet. In der Staubsammelkammer 58 ist eine Filtereinheit 68 angeordnet, die zur Filterung des Staubguts aus dem Luftstrom ausgebildet ist. Der Luftstrom verlässt über die Filtereinheit 68 die Staubsammelkammer 58 und wird mittels eines Luftleitelements 70 zu der Ausgangsöffnung 66 geleitet. Die Handwerkzeugmaschine 10 weist einen Lufteinlass 67 auf. Im verbundenen Zustand sind die Ausgangsöffnung 66 der Staubabsaugvorrichtung 36 und der Lufteinlass 67 derart angeordnet, dass der Luftstrom direkt von der Ausgangsöffnung 66 in den Lufteinlass 67 geleitet wird und dadurch in das Gehäuse 12 der Handwerkzeugmaschine 10 geleitet wird. Insbesondere liegen die Staubabsaugvorrichtung 36 und die Handwerkzeugmaschine 10 im Bereich der Ausgangsöffnung 66 bzw. im Bereich des Lufteinlasses 67 aneinander an. Der Luftstrom verlässt über nicht näher dargestellte Luftauslässe das Gehäuse 12 der Handwerkzeugmaschine 10.

In Fig. 2a ist ein Teilschnitt durch die Staubabsaugvorrichtung 36 gezeigt. Die Staubsammelkammer 58 weist einen Eingang 71, über den der Luftstrom in die Staubsammelkammer 58 eintritt, und einen Ausgang 72, über den der Luftstrom die Staubsammelkammer 58 verlässt, auf. Im Bereich des Eingangs 71 der Staubsammelkammer 58 wird der Luftstrom aus der Teleskopeinheit 40 mittels eines gekrümmten Rohrs 74, welches teilweise in die Staubsammelkammer 58 hineinragt, in die Staubsammelkammer 58 geleitet. Im Bereich des Ausgangs 72 weist die Staubsammelkammer 58 eine Filteraufnahme 76 auf, die zur Aufnahme der Filtereinheit 68 ausgebildet ist. Die Filteraufnahme 76 ist beispielhaft derart ausgebildet, dass die Filtereinheit 68 lösbar verbindbar mit der Staubsammelkammer 58, insbesondere mit dem Staubsammelkammergehäuse 60, ist.

Die Filtereinheit 68 weist ein Filterelement 78 und einen Filterrahmen 80 auf. Das Filterelement 78 ist beispielhaft als ein HEPA-Filter ausgebildet. Der Filterrahmen 80 ist kraftschlüssig in der Filteraufnahme 76 gehalten. Die Filtereinheit 68 bzw. das Filterelement 78 ragen in die Staubsammelkammer 58 hinein. Insbesondere ist die Filtereinheit 68 frei hängend ausgebildet, sodass die Filtereinheit 68 auf ihrer der Filteraufnahme 76 abgewandten Seite nicht am Staubsammelkammergehäuse 60 der Staubsammelkammer 58 anliegt.

In Strömungsrichtung des Luftstroms hinter der Filtereinheit 68 und außerhalb der Staubsammelkammer 58 wird der Luftstrom über das kaminartige Luftleitelement 70 zu der Ausgangsöffnung 66 der Staubabsaugvorrichtung 36 geleitet. Das Luftleitelement 70 spannt einen Luftleitbereich 82 auf, der im Wesentlichen geschlossen ausgebildet ist und im Wesentlichen den gesamten durch die Filtereinheit 68 hindurchtretende Luftstrom zu der Ausgangsöffnung 66 leitet. Das Volumen des Luftleitbereichs 82 ist kleiner als 50 % des Volumens des Gehäuses 38, insbesondere kleiner als 25 % des Volumens des Gehäuses 38.

Das Luftleitelement 70 liegt an der Filtereinheit 68 an. Insbesondere liegt das Luftleitelement 70 über ein Dichtelement 84 an der Filtereinheit 68 an, damit im Kontaktbereich der Luftstrom nicht teilweise ein- und/oder austreten kann. Das Dichtelement 84 ist beispielhaft einstückig mit dem Filterrahmen 80 ausgebildet. Das Dichtelement 84 weist ein abstehendes freies Ende auf. Das freie Ende ist beispielhaft auf einer der Staubsammelkammer 58 abgewandten Seite angeordnet. Das Dichtelement 84 ist beispielhaft als Dichtlippe ausgebildet. Im gezeigten und montierten Zustand befindet sich das Dichtelement 84 in einem gestauchten Zustand, sodass das freie Ende verbogen bzw. gekrümmt ist.

Um eine stets hohe Filterleistung zu gewährleisten weist die Staubabsaugvorrichtung 36 eine Filterreinigungseinheit 86 auf. Der Filterreinigungseinheit 86 ist beispielhaft im Luftkanal 63 angeordnet. Alternativ ist ebenso denkbar, dass die Filterreinigungseinheit 86 beabstandet zu dem Luftkanal 63 angeordnet ist. Insbesondere ist die Filterreinigungseinheit 86 im Luftleitbereich 82 angeordnet.

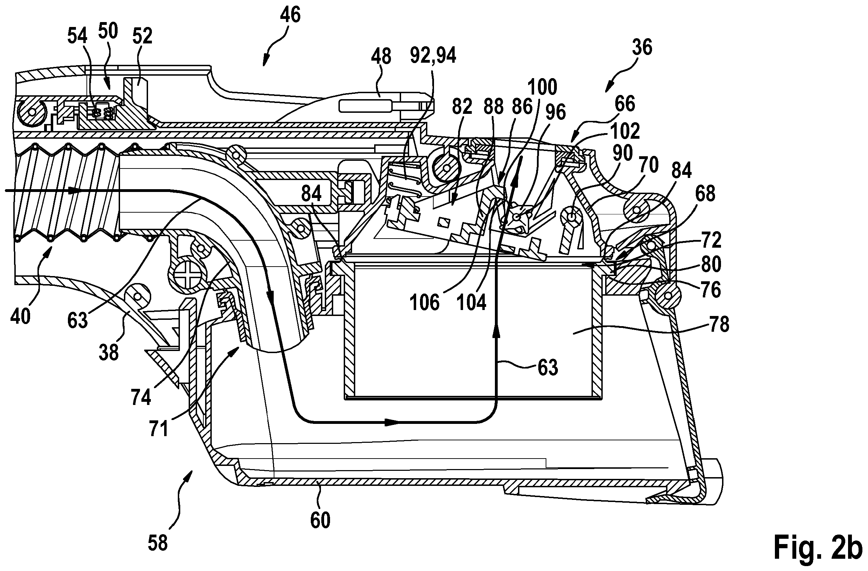

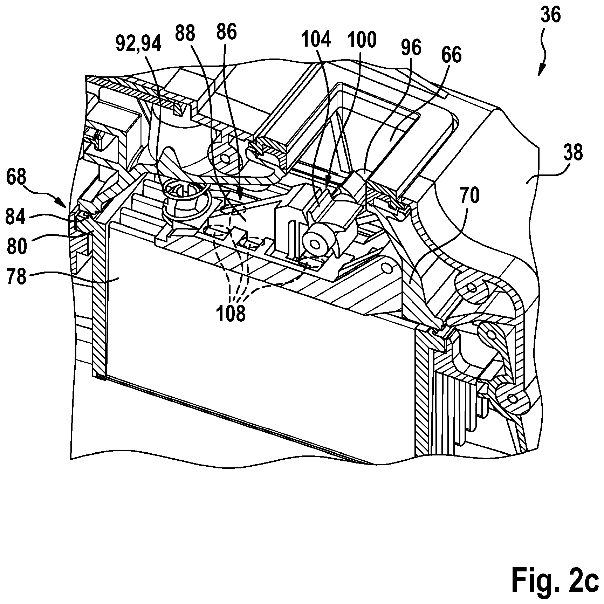

Die Filterreinigungseinheit 86 ist in Fig. 2a in einer Ruheposition und in Fig. 2b in einer gespannten Position gezeigt. In Fig. 2c ist die Filterreinigungseinheit 86 in einem perspektivischen Teilschnitt gezeigt. Die Filterreinigungseinheit 86 weist ein Stoßelement 88 auf, das dazu ausgebildet ist, die Filtereinheit 68 direkt mit einer stoßartigen Kraft zu beaufschlagen. Das Stoßelement 88 besteht aus einem Kunststoff, insbesondere einer Hartplastik. Das Stoßelement 88 ist vollständig im Luftleitbereich 82 angeordnet. Das Stoßelement 88 liegt an der Filtereinheit 68, insbesondere an dem Filterelement 78 der Filtereinheit 68, an. Das Stoßelement 88 ist beweglich, insbesondere schwenkbar um eine Bewegungsachse 90, im Gehäuse 38 der Staubabsaugvorrichtung 36 gelagert.

Die Filterreinigungseinheit 86 weist zudem ein Rückstellelement 92 auf, das beispielhaft als ein Federelement 94 ausgebildet ist. Das Federelement 94 ist beispielhaft als eine Druckfeder ausgebildet. Das Federelement 94 beaufschlagt das Stoßelement 88 mit einer Kraft in Richtung der Filtereinheit 68. Insbesondere stützt sich das Federelement 94 auf einer Seite am Luftleitelement 70 und auf der anderen Seite am Stoßelement 88 ab. Vorzugsweise stützt sich das Federelement 94 auf einer der Bewegungsachse 90 gegenüberliegenden Seite des Stoßelements 88 ab, um eine möglichst große Kraftwirkung zu erzeugen.

Das Stoßelement 88 ist manuell betätigbar ausgebildet. Hierzu ist das Stoßelement 88 mechanisch mit einem Betätigungselement 96 gekoppelt. Das Betätigungselement 96 weist eine Bedienfläche 98, über die das Betätigungselement 96 von einem Benutzer bedienbar ist, und einen Koppelbereich 100, über den das Betätigungselement 96 mit dem Stoßelement 88 verbindbar ist, auf.

Die Bedienfläche 98 ist derart angeordnet, dass die Bedienfläche 98 von außen betätigbar ist. Die Bedienfläche 98 ist insbesondere außerhalb des Gehäuses 38 der Staubabsaugvorrichtung 36 angeordnet. Das Betätigungselement 96 ist im Bereich der Bedienfläche 98 drehradförmig ausgebildet und mittels der Bedienfläche 98 um eine Betätigungsachse 102 drehbar ausgebildet.

Der Koppelbereich 100 ist innerhalb des Gehäuse 38 der Staubabsaugvorrichtung 36, insbesondere innerhalb des Luftleitbereichs 82, angeordnet. Das Betätigungselement 96 ist im Koppelbereich 100 zahnradförmig ausgebildet. Beispielhaft weist das Betätigungselement 96 im Koppelbereich 100 in Umfangsrichtung vier Zähne 104 auf, zwischen denen jeweils eine Lücke angeordnet ist.

In der in Fig. 2a gezeigten Ruheposition der Filterreinigungseinheit 86 ist das Stoßelement 88 außer Eingriff mit dem Betätigungselement 96. Insbesondere ist ein Anschlag 106 des Stoßelements 88 in der Lücke zwischen zwei Zähnen 104 des Koppelbereichs 100 angeordnet. Durch eine manuelle Betätigung des Betätigungselements 96 wird das Betätigungselement 96 um die Betätigungsachse 102 gedreht bis einer der Zähne 104 am Anschlag 106 des Stoßelements 88 zum Anliegen kommt. Durch eine weitere Drehung des Betätigungselements 96 wird nun eine Kraft auf das Stoßelement 88 übertragen, welches aus seiner Ruheposition heraus in eine gespannte Position bewegt bzw. geschwenkt wird. Die Bewegung bzw. das Schwenken des Stoßelements 88 erfolgt entgegen der Rückstellkraft des Rückstellelements 92. In Fig. 2b ist das Stoßelement in der gespannten Position gezeigt, wobei eines der Zähne 104 an seinem Scheitelpunkt am Anschlag 106 des Stoßelements 88 anliegt. Wird das Betätigungselement 96 weitergedreht, so geraten der Zahn 104 des Betätigungselements 96 und der Anschlag 106 des Stoßelements 88 außer Eingriff und das Stoßelement 88 wird durch die Rückstellkraft des Rückstellelements 92 in Richtung der Filtereinheit 68 beschleunigt, wobei das Stoßelement 88 die Filtereinheit 68, insbesondere das Filterelement 78, direkt mit einer stoßartigen Kraft beaufschlagt. Vorteilhaft wird durch die stoßartige Kraft am Filterelement 78 festgesetzter Staub gelöst und die Filterreinigungskraft der Filterreinigungseinheit 86 zumindest teilweise regeneriert.

In Fig. 2c ist zudem gezeigt, dass das Stoßelement 88 Lufttransportkanäle 108 aufweist, durch die der Luftstrom das Stoßelement 88 passieren kann. Die Lufttransportkanäle sind als Ausnehmungen ausgebildet, die sich insbesondere in Strömungsrichtung durch des Stoßelement 88 hindurch erstrecken.

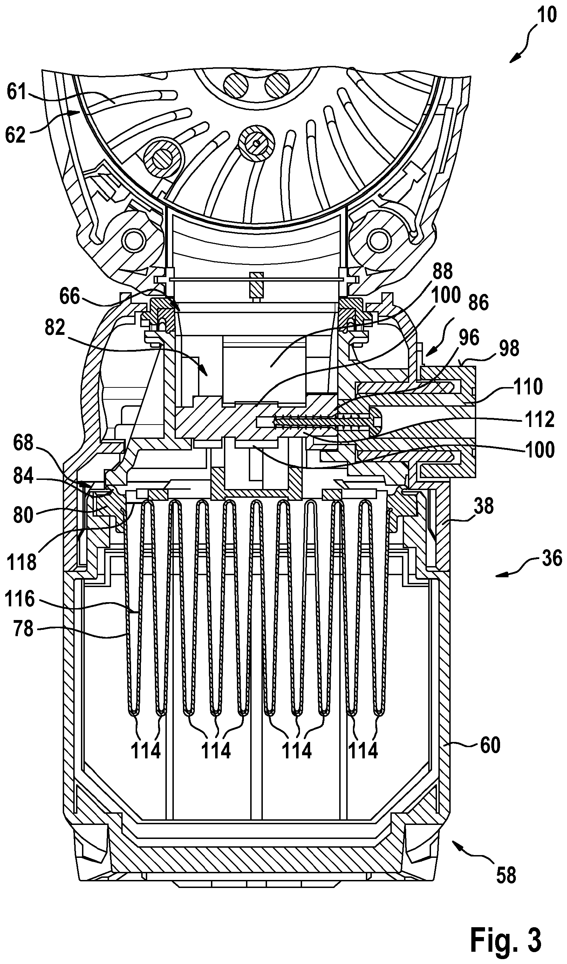

In Fig. 3 ist ein Querschnitt durch das System aus der Handwerkzeugmaschine 10 und der Staubabsaugvorrichtung 36 im verbundenen Zustand gezeigt. Im Luftkanal 63 wird der Luftstrom aus der Staubsammelkammer 58 heraus durch die Filtereinheit 68 geleitet und im Anschluss über den Luftleitbereich 82 zu der Ausgangsöffnung 66 geleitet. Unmittelbar hinter der Ausgangsöffnung 66 tritt der Luftstrom über den Lufteinlass 67 der Handwerkzeugmaschine 10 in das Gehäuse 12 der Handwerkzeugmaschine 10 ein und wird in Richtung des Lüfters 61 der Gebläseeinheit 62 angesaugt.

Das Betätigungselement 96 besteht aus einem ersten Betätigungselementteil 110 und einem zweiten Betätigungselementteil 112, die über eine Schraubverbindung miteinander verbunden sind. Das erste Betätigungselementteil 110 weist die Bedienfläche 98 auf und das zweite Betätigungselementteil 112 weist den Koppelbereich 100 auf. Die Bedienfläche 98 ist in dieser Ausführungsform einseitig ausgebildet, und somit nur von einer Seite des Gehäuses 38 der Staubabsaugvorrichtung 36 für den Benutzer zugänglich. Vorzugsweise ist die Bedienfläche 98 des Betätigungselements 96 auf der Seite des Systems angeordnet, auf der auch die Betriebsartenschalter 32 und/oder der Drehrichtungsschalter 34 der Handwerkzeugmaschine 10 angeordnet sind. Es ist allerdings auch denkbar, dass das Betätigungselement 96 eine zweite Bedienfläche 98 aufweist, die auf der der ersten Bedienfläche 98 gegenüberliegenden Seite angeordnet ist.

Das Filterelement 78 weist beispielhaft zehn Filtertaschen 114 auf, die konisch ausgebildet sind. Die Filtertaschen 114 sind insbesondere derart konisch ausgebildet, dass die Filteraschen eine Halbwertsbreite 116 aufweist, die höchstens 85 % einer maximalen Breite 118 der Filtertasche 114 entspricht, vorzugsweise höchstens 70 % der maximalen Breite 118 der Filtertaschen 114 entspricht. In der gezeigten Ausführungsform entspricht die Halbwertsbreite 116 im Wesentlichen 60 % der maximalen Breite 118 der Filtertasche 114.

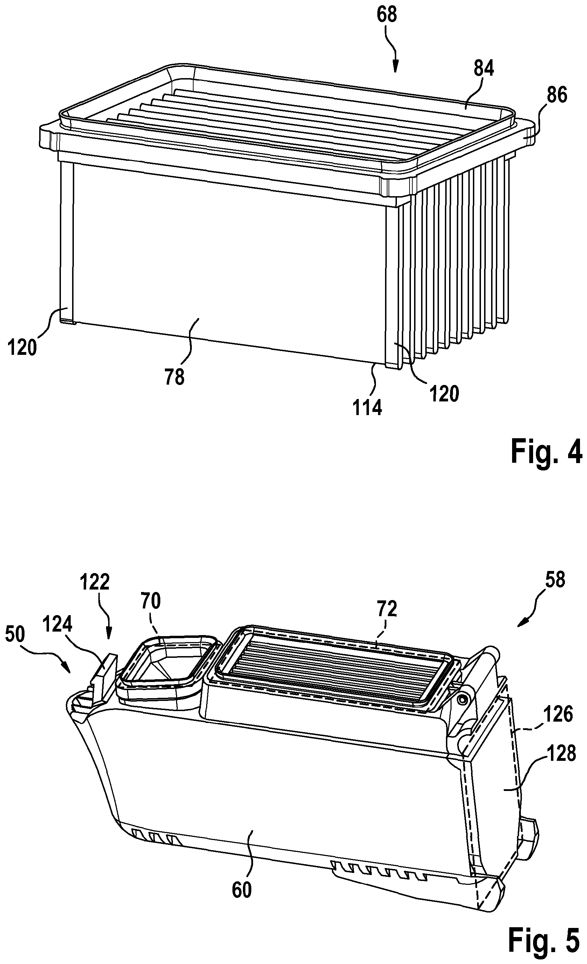

In Fig. 4 ist eine perspektivische Ansicht der Filtereinheit 68 gezeigt. Der Filterrahmen 80 weist zumindest teilweise eine rechteckige Form auf. Der Filterrahmen 80 besteht aus einem Kunststoff, insbesondere aus einem Weichplastik Material. Die Filtereinheit 68 weist je Filtertasche 114 zwei Verschlusselemente 120 auf, die die Filtertaschen 114 seitlich verschließen. Die Verschlusselemente 120 bestehen aus demselben Material wie der Filterrahmen 80. Vorzugsweise ist der Filterrahmen 80, die Verschlusselemente 120 und das Dichtelement 84 der Filtereinheit 68 einstückig ausgebildet. Vorteilhaft kann dadurch die Filtereinheit 68 durch Umspritzen des Filterelements 78 mit dem Filterrahmen 80, den Verschlusselementen 120 und dem Dichtelement 84 hergestellt werden.

In Fig. 5 ist eine perspektivische Ansicht der Staubsammelkammer 58 im von der Staubabsaugvorrichtung 36 gelösten Zustand gezeigt. Die Verbindung der Staubsammelkammer 58, insbesondere des Staubsammelkammergehäuses 60, mit dem Staubabsaugvorrichtung 36, insbesondere mit dem Gehäuse 38 der Staubabsaugvorrichtung 36, erfolgt beispielhaft über eine Rasteinheit 122, die einen federnden Rastarm 124 umfasst. Neben dem Eingang 71 und dem Ausgang 72, über die der Luftstrom die Staubsammelkammer 58 während des Betriebs passiert, weist die Staubsammelkammer 58 zusätzliche eine Entleerungsöffnung 126 auf, über die die Staubsammelkammer 58 entleerbar ist. Die Staubsammelkammer 58 weist eine Entleerungsklappe 128 auf, die schwenkbar am Staubsammelkammergehäuse 60 gelagert ist. Über die Entleerungsklappe 128 ist die Entleerungsöffnung 126 verschließbar ausgebildet.

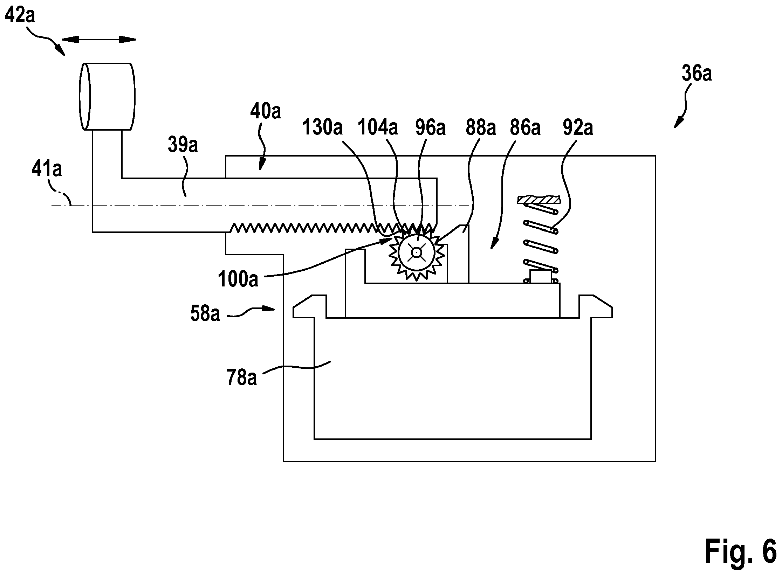

In Fig. 6 ist eine alternative Ausführungsform der Staubabsaugvorrichtung 36 in einer schematischen Ansicht gezeigt. Die Staubabsaugvorrichtung 36a unterscheidet sich von der zuvor gezeigten Ausführungsform insbesondere durch die Art der Betätigung der Filterreinigungseinheit 86a. Insbesondere ist die Filterreinigungseinheit 86a derart ausgebildet, dass das Betätigungselement 96a automatisch betätigbar ist.

Das Betätigungselement 96a der Filterreinigungseinheit 86a weist einen Koppelbereich 100a auf, in welchem das Betätigungselement 96a zahnradförmig ausgebildet ist. Insbesondere weist das Betätigungselement 96a im Koppelbereich 100a eine Vielzahl an Zähnen 104a auf. Die Zähne 104a des Betätigungselements 96a befinden sich teilweise in Eingriff mit einer korrespondierenden Verzahnung 130a, die an der Teleskopeinheit 40a, insbesondere am Teleskoprohr 39a, angeordnet ist. Wird während des Betriebs der Staubabsaugvorrichtung 36a die Teleskopeinheit 40a entlang der Teleskopachse 41a durch die Beaufschlagung eines Werkstücks mit dem Saugkopf 42a bewegt, so erfolgt eine automatische Betätigung des Betätigungselements 96a. Das Betätigungselement 96a ist wiederum mit dem Stoßelement 88a zumindest mechanisch gekoppelt, welches in seiner Ruheposition an der Filtereinheit 68a anliegt und durch die Bewegung der Teleskopeinheit 40a entgegen einer Rückstellkraft eines Rückstellelements 92a bewegt wird. Beim Übergang zwischen zwei Zähnen 104a des Betätigungselements 96a beaufschlagt das Stoßelement 88a wie bereits zuvor beschrieben die Filtereinheit 68a direkt mit einer stoßartigen Kraft.

Ergänzend ist ebenso denkbar, dass das Betätigungselement 96a eine Bedienfläche 98a aufweist, die von einem Benutzer bedienbar ausgebildet ist. Vorteilhaft kann dadurch eine manuelle und eine automatische Betätigung des Betätigungselements 96a realisiert werden.

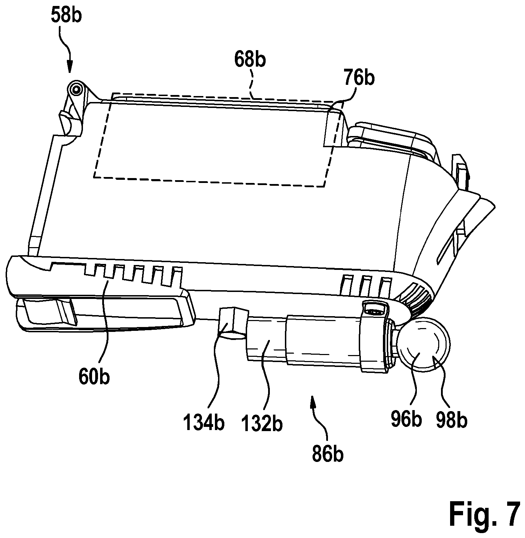

In Fig. 7 ist eine weitere Ausführungsform der Filterreinigungseinheit 86 gezeigt. Im Unterschied zu den vorherigen Ausführungsbeispielen ist die Filterreinigungseinheit 86b derart ausgebildet, dass eine stoßartige Kraft indirekt auf die Filtereinheit 68b wirkt.

Die Filterreinigungseinheit 86b ist beispielhaft am Staubsammelkammergehäuse 60b der Staubsammelkammer 58b angeordnet. Die Staubsammelkammer 58b entspricht im Wesentlichen der Staubsammelkammer 58 gemäß Fig. 5. Die Filtereinheit 68b ist über die Filteraufnahme 76b lösbar mit dem Staubsammelkammergehäuse 60b verbunden. Die Filteraufnahme 76b ist auf einer Oberseite der Staubsammelkammer 58b angeordnet. Auf einer Unterseite der Staubsammelkammer 58b, insbesondere auf einer Außenwand des Staubsammelkammergehäuses 60b, ist die Filterreinigungseinheit 86b angeordnet.

Die Filterreinigungseinheit 86b weist ein linear beweglich gelagertes Stoßelement 132b auf. Das Stoßelement 132b besteht beispielsweise aus einem metallischen Werkstoff, insbesondere aus Edelstahl. Das Stoßelement 132b ist mit einem Betätigungselement 96b mechanisch gekoppelt, welches eine kugelförmige Bedienfläche 98b aufweist. Über ein Ziehen des Betätigungselements 96b ist das Stoßelement 132b entgegen einer Rückstellkraft aus seiner Ruheposition beweglich ausgebildet. Die Rückstellkraft wird durch ein nicht näher dargestelltes Rückstellelement aufgebracht, das beispielhaft als ein Federelement ausgebildet sein kann. Wird das Betätigungselement 96b losgelassen, so führt das Stoßelement 132b eine stoßartige Bewegung durch bis es an einem Anschlag 134b die stoßartige Kraft auf das Staubsammelkammergehäuse 60b überträgt. Der Anschlag 134b ist beispielhaft metallisch ausgebildet. Insbesondere ist der Anschlag 134b als eine Edelstahlmutter ausgebildet, die an das Staubsammelkammergehäuse 60b angeschraubt ist. Alternativ wäre allerdings auch denkbar, dass der Anschlag 134b einstückig mit dem Staubsammelkammergehäuse 60b ausgebildet ist. Vorteilhaft kann durch die metallische Ausbildung des Stoßelements 132b und des Anschlags 134b eine ausreichend große stoßartige Kraft erzeugt werden, damit auch über die indirekte Wirkung auf die Filtereinheit 68b eine hohe Filterreinigungseffizienz vorhanden ist.

## Patentansprüche

1. Staubabsaugvorrichtung für eine Handwerkzeugmaschine, mit einem Gehäuse (38), mit einer am Gehäuse (38) befindlichen mechanischen Schnittstelle (46) zur lösbaren Verbindung der Staubabsaugvorrichtung (36) an der Handwerkzeugmaschine (10), mit einer Staubsammelkammer (58), die mit einer Filtereinheit (68) verbunden ist, und mit einer Filterreinigungseinheit (86), wobei die Filterreinigungseinheit (86) ein Stoßelement (88) aufweist, das beweglich im und/oder am Gehäuse (38) der Staubabsaugvorrichtung (36) gelagert ist, wobei das Stoßelement (88) dazu ausgebildet ist, die Filtereinheit (68) direkt mit einer stoßartigen Kraft zu beaufschlagen, **dadurch gekennzeichnet, dass** die Filterreinigungseinheit (86) ein Rückstellelement (92) aufweist, dass das Stoßelement (88) mit einer Kraft in Richtung der Filtereinheit (68) beaufschlagt.

2. Staubabsaugvorrichtung nach Anspruch 1, **dadurch gekennzeichnet, dass** die Filterreinigungseinheit (86), insbesondere das Stoßelement (88) der Filterreinigungseinheit (86), an der Filtereinheit (68), vorzugsweise an einem Filterelement (78) der Filtereinheit (68), anliegt.

3. Staubabsaugvorrichtung nach Anspruch 1 oder 2, **dadurch gekennzeichnet, dass** das Stoßelement (88) zwischen der Filtereinheit (68) und dem Rückstellelement (92) angeordnet ist.

4. Staubabsaugvorrichtung nach einem der vorhergehenden Ansprüche, **dadurch gekennzeichnet, dass** die Filterreinigungseinheit (86) ein Betätigungselement (96) aufweist, das mechanisch mit dem Stoßelement (88) gekoppelt ist.

5. Staubabsaugvorrichtung nach Anspruch 4, **dadurch gekennzeichnet, dass** eine Betätigungsachse (102) des Betätigungselements (96) und eine Bewegungsachse (90) des Stoßelements (88) parallel sind.

6. Staubabsaugvorrichtung nach einem der Ansprüche 4 oder 5, **dadurch gekennzeichnet, dass** das Betätigungselement (96) zur manuellen Betätigung ausgebildet ist und eine Bedienfläche (98) aufweist.

7. Staubabsaugvorrichtung nach Anspruch 6, **dadurch gekennzeichnet, dass** die Bedienfläche (98) seitlich angeordnet ist.

8. Staubabsaugvorrichtung nach einem der vorhergehenden Ansprüche, **dadurch gekennzeichnet, dass** das Stoßelement (88) zumindest einen Lufttransportkanal (108) aufweist.

9. Staubabsaugvorrichtung nach einem der Ansprüche 4 bis 8, **dadurch gekennzeichnet, dass** das Betätigungselement (96b) zur automatischen Betätigung ausgebildet ist.

10. Staubabsaugvorrichtung nach Anspruch 9, **dadurch gekennzeichnet, dass** das Betätigungselement (96b) derart ausgebildet ist, dass die automatische Betätigung während einer Verbindung der Staubabsaugvorrichtung (36b) mit der Handwerkzeugmaschine (10) oder während des Bohrvorgangs erfolgt.

11. Staubabsaugvorrichtung nach einem der vorhergehenden Ansprüche, **dadurch gekennzeichnet, dass** die Filtereinheit (68) einen Filterrahmen (80) aufweist, wobei der Filterrahmen (80) mit der Staubsammelkammer (58) verbindbar ist.

12. Staubabsaugvorrichtung nach einem der vorhergehenden Ansprüche, **dadurch gekennzeichnet, dass** das Filterelement (78) Filtertaschen (114) aufweist, die konisch ausgebildet sind.

13. Staubabsaugvorrichtung nach einem der vorhergehenden Ansprüche, **dadurch gekennzeichnet, dass** die Filtereinheit (68) ein elastisches Dichtelement (84) aufweist, das zwischen der Staubsammelkammer (58) und/oder dem Gehäuse (38) der Staubabsaugvorrichtung (36) angeordnet ist, wobei das Dichtelement (84) im montierten Zustand gestaucht ausgebildet ist.

14. Staubabsaugvorrichtung nach Anspruch 13, **dadurch gekennzeichnet, dass** das Dichtelement (84) und der Filterrahmen (80) einstückig ausgebildet sind.

## Claims

1. Dust extraction apparatus for a hand-held power tool, having a housing (38) with a mechanical interface (46), located on the housing (38), for releasably connecting the dust extraction apparatus (36) to the hand-held power tool (10), having a dust collection chamber (58) which is connected to a filter unit (68) and having a filter cleaning unit (86), wherein the filter cleaning unit (86) has an impact element (88) which is mounted movably in and/or on the housing (38) of the dust extraction apparatus (36),
wherein
the impact element (88) is configured to exert an impact-like force directly on the filter unit (68), **characterized in that** the filter cleaning unit (86) has a restoring element (92) which exerts a force on the impact element (88) in the direction of the filter unit (68).

2. Dust extraction apparatus according to Claim 1, **characterized in that** the filter cleaning unit (86), in particular the impact element (88) of the filter cleaning unit (86), bears on the filter unit (68), preferably on a filter element (78) of the filter unit (68).

3. Dust extraction apparatus according to Claim 1 or 2, **characterized in that** the impact element (88) is arranged between the filter unit (68) and the restoring element (92).

4. Dust extraction apparatus according to one of the preceding claims, **characterized in that** the filter cleaning unit (86) has an actuating element (96) which is mechanically coupled to the impact element (88) .

5. Dust extraction apparatus according to Claim 4, **characterized in that** an actuation axis (102) of the actuating element (96) and a movement axis (90) of the impact element (88) are parallel.

6. Dust extraction apparatus according to either of Claims 4 and 5, **characterized in that** the actuating element (96) is configured for manual actuation and has an operating surface (98).

7. Dust extraction apparatus according to Claim 6, **characterized in that** the operating surface (98) is arranged laterally.

8. Dust extraction apparatus according to one of the preceding claims, **characterized in that** the impact element (88) has at least one air conveying channel (108) .

9. Dust extraction apparatus according to one of Claims 4 to 8, **characterized in that** the actuating element (96b) is configured for automatic actuation.

10. Dust extraction apparatus according to Claim 9, **characterized in that** the actuating element (96b) is configured such that the automatic actuation takes place while the dust extraction apparatus (36b) is connected to the hand-held power tool (10) or during drilling operation.

11. Dust extraction apparatus according to one of the preceding claims, **characterized in that** the filter unit (68) has a filter frame (80), wherein the filter frame (80) is connectable to the dust collection chamber (58).

12. Dust extraction apparatus according to one of the preceding claims, **characterized in that** the filter element (78) has filter pockets (114) which are formed in a conical manner.

13. Dust extraction apparatus according to one of the preceding claims, **characterized in that** the filter unit (68) has an elastic sealing element (84) which is arranged between the dust collection chamber (58) and/or the housing (38) of the dust extraction apparatus (36), wherein the sealing element (84) is compressed in the mounted state.

14. Dust extraction apparatus according to Claim 13, **characterized in that** the sealing element (84) and the filter frame (80) are formed in one piece.

## Revendications

1. Dispositif d'aspiration de poussière pour une machine-outil à main, comprenant un boîtier (38), comprenant une interface mécanique (46) se trouvant sur le boîtier (38) pour la liaison amovible du dispositif d'aspiration de poussière (36) à la machine-outil à main (10), comprenant une chambre de collecte de poussière (58), qui est reliée à une unité de filtre (68), et comprenant une unité de nettoyage de filtre (86), l'unité de nettoyage de filtre (86) présentant un élément d'impact (88), qui est logé de manière mobile dans et/ou sur le boîtier (38) du dispositif d'aspiration de poussière (36),
l'élément d'impact (88) étant configuré pour solliciter directement l'unité de filtre (68) avec une force de type impact, **caractérisé en ce que** l'unité de nettoyage de filtre (86) présente un élément de rappel (92), qui sollicite l'élément d'impact (88) avec une force en direction de l'unité de filtre (68).

2. Dispositif d'aspiration de poussière selon la revendication 1, **caractérisé en ce que** l'unité de nettoyage de filtre (86), en particulier l'élément d'impact (88) de l'unité de nettoyage de filtre (86), repose sur l'unité de filtre (68), de préférence sur un élément de filtre (78) de l'unité de filtre (68).

3. Dispositif d'aspiration de poussière selon la revendication 1 ou 2, **caractérisé en ce que** l'élément d'impact (88) est agencé entre l'unité de filtre (68) et l'élément de rappel (92).

4. Dispositif d'aspiration de poussière selon l'une quelconque des revendications précédentes, **caractérisé en ce que** l'unité de nettoyage de filtre (86) présente un élément d'actionnement (96) qui est couplé mécaniquement à l'élément d'impact (88).

5. Dispositif d'aspiration de poussière selon la revendication 4, **caractérisé en ce qu'**un axe d'actionnement (102) de l'élément d'actionnement (96) et un axe de déplacement (90) de l'élément d'impact (88) sont parallèles.

6. Dispositif d'aspiration de poussière selon l'une quelconque des revendications 4 ou 5, **caractérisé en ce que** l'élément d'actionnement (96) est configuré pour un actionnement manuel et présente une surface de commande (98).

7. Dispositif d'aspiration de poussière selon la revendication 6, **caractérisé en ce que** la surface de commande (98) est agencée latéralement.

8. Dispositif d'aspiration de poussière selon l'une quelconque des revendications précédentes, **caractérisé en ce que** l'élément d'impact (88) présente au moins un canal de transport d'air (108).

9. Dispositif d'aspiration de poussière selon l'une quelconque des revendications 4 à 8, **caractérisé en ce que** l'élément d'actionnement (96b) est configuré pour un actionnement automatique.

10. Dispositif d'aspiration de poussière selon la revendication 9, **caractérisé en ce que** l'élément d'actionnement (96b) est configuré de telle sorte que l'actionnement automatique s'effectue pendant une liaison du dispositif d'aspiration de poussière (36b) à la machine-outil à main (10) ou pendant l'opération de perçage.

11. Dispositif d'aspiration de poussière selon l'une quelconque des revendications précédentes, **caractérisé en ce que** l'unité de filtre (68) présente un cadre de filtre (80), le cadre de filtre (80) pouvant être relié à la chambre de collecte de poussière (58).

12. Dispositif d'aspiration de poussière selon l'une quelconque des revendications précédentes, **caractérisé en ce que** l'élément de filtre (78) présente des poches filtrantes (114) qui sont configurées sous forme conique.

13. Dispositif d'aspiration de poussière selon l'une quelconque des revendications précédentes, **caractérisé en ce que** l'unité de filtre (68) présente un élément d'étanchéité élastique (84), qui est agencé entre la chambre de collecte de poussière (58) et/ou le boîtier (38) du dispositif d'aspiration de poussière (36), l'élément d'étanchéité (84) étant configuré sous forme comprimée à l'état monté.

14. Dispositif d'aspiration de poussière selon la revendication 13, **caractérisé en ce que** l'élément d'étanchéité (84) et le cadre de filtre (80) sont configurés d'un seul tenant.
